# EUROPEAN PATENT SPECIFICATION

(11) **EP 4 531 462 B1**
(45) Date of publication and mention of the grant of the patent: **17.06.2026**
(21) Application number: 24202024.6
(22) Date of filing: 23.09.2024
(51) Int. Cl.: H04W 12/03, H04W 12/06, H04W 48/16, H04W 84/12, H04W 76/15

(54) **SYSTEMS, METHODS, AND APPARATUSES FOR ASSOCIATION ENHANCEMENTS IN UHR**
SYSTEME, VERFAHREN UND VORRICHTUNGEN ZUR ASSOZIATIONSVERBESSERUNGEN IN EINER ATEMSCHUTZVORRICHTUNG
SYSTÈMES, PROCÉDÉS ET APPAREILS POUR DES AMÉLIORATIONS D'ASSOCIATION DANS UNE UHR

(30) Priority: 29.09.2023 US 202363586715 P
(43) Date of publication of application: 02.04.2025
(73) Proprietor: Apple Inc., Cupertino, CA 95014 (US)
(72) Inventor: GHOSH, CHITTABRATA, Fremont (US); BATRA, ANUJ, Redwood City (US); MONAJEMI, POOYA, San Jose (US); LIU, YONG, Campbell (US); DOMINGUEZ, CHARLES F, San Carlos (US)
(74) Representative: Rooney, John-Paul

(56) References cited:
- WO-A1-2022/047180
- WO-A1-2023/059812
- WO-A1-2023/154918
- US-A1- 2022 225 200
- DUNCAN HO (QUALCOMM TECHNOLOGIES ET AL: "Seamless Roaming follow-up", vol. 802.11 UHR, 11 September 2023 (2023-09-11), pages 1 - 10, XP068205058, Retrieved from the Internet <URL:https://mentor.ieee.org/802.11/dcn/23/11-23-1416-00-0uhr-seamless-roaming-follow-up.pptx> [retrieved on 20230911]

## Description

### TECHNICAL FIELD

This application relates generally to wireless communication systems, including a network entity to associate multiple access point (AP) multi-link devices (MLDs).

### BACKGROUND

Wireless communication technology uses various standards and protocols to transmit data between an access point and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

In the 802.11 standard for WLAN, an access point (AP) is a device that creates a wireless local area network (WLAN), or Wi-Fi^{®} network. It may be connected to a wired network, such as an Ethernet network, and provides wireless access to that network for other devices. A station is a device that is capable of being wirelessly connected to the AP to join the WLAN network. Stations can be laptops, smartphones, tablets, or any other device with a WLAN adapter.

APs and stations communicate with each other using the Wi-Fi^{®} protocol. Various protocols have been established to increase security over a wireless communication network. For example, Simultaneous Authentication of Equals is the core authentication protocol of WPA3-Personal, and is mandated to be supported by all Wi-Fi^{®} Alliance certified devices, including both access points (APs) and non-AP stations (STAs). Known art includes WO 2023/059812 (which discloses an overarching logical entity comprising of a set of AP MLDs that coordinates operations in a multiple access point multi-link device set), WO 2023/154918 (which discloses using a single encryption key between an AP MLD and a STA MLD), IEEE Draft on "Seamless Roaming follow-up" by Duncan Ho et. al. (which discloses a proposal of creating a MLD-like entity that manages all the APs (co-located or not) and maintains the association and security context with an 11bn client), WO 2022/047180 (which discloses utilizing a MLD MAC address to perform data encryption using the same encryption key between an AP MLD and STA MLD) and US 2022/225200 (which discloses a method for speeding up STA's process of finding the next AP to associate with).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example signal flow diagram for a Fast Basic Service Set (BSS) Transition (FT), in accordance with some embodiments.
FIG. 2 illustrates an example Multi-link Multi-device (MLMD) that may be used to reduce roaming latency, in accordance with some embodiments.
FIG. 3 illustrates an example network diagram that uses two MLMDs, in accordance with some embodiments.
FIG. 4 illustrates an example basic multi-link element (MLE) and an example MLMD element, in accordance with some embodiments.
FIG. 5 illustrates a table of example APs and link IDs that may be determined by an STA during discovery, in accordance with some embodiments.
FIG. 6 illustrates an example beacon frame body, in accordance with some embodiments.
FIG. 7A illustrates an example authentication request frame and an authentication response frame, in accordance with some embodiments.
FIG. 7B illustrates an example authentication frame body, in accordance with some embodiments.
FIG. 8 illustrates an example signal diagram for an STA MLD associating with one or more APs that correspond to one or more AP MLDs that correspond to an MLMD, in accordance with some embodiments.
FIG. 9 illustrates an example STA control field format in a reconfiguration MLE, in accordance with some embodiments.
FIG. 10 illustrates an example signal diagram for an STA MLD to set up links across multiple AP MLDs using an MLMD association request frame with one AP MLD, in accordance with some embodiments.
FIG. 11 illustrates an example signal flow diagram for setting up links across multiple AP MLDs using cross AP MLD communication, in accordance with some embodiments.
FIG. 12 illustrates an example STA state transition table, in accordance with some embodiments.
FIG. 13 illustrates an example network in which two STAs are assigned a same AID, in accordance with some embodiments.
FIG. 14 illustrates an example signal flow diagram for CCMP encapsulation, in accordance with some embodiments.
FIG. 15 illustrates an example system for performing signaling between a wireless device and a network device, according to embodiments disclosed herein.

### DETAILED DESCRIPTION

Roaming in a wireless communication systems (e.g., Wi-Fi^{®} networks) refers to the transition of a wireless client device or station, such as a smartphone or laptop, between different access points within a wireless network. When a device moves away from one access point and the signal attenuates, it may automatically connect to another nearby access point without any disruption in connectivity. This technology allows users to stay connected to the internet and maintain a continuous network session while moving within a coverage area or across coverage areas.

In a Wi-Fi^{®} roaming scenario, the roaming device can send out signals to search for available access points and/or scan for signals from one or more available access points. Once a compatible access point is detected, the device negotiates a connection and authenticates itself with the new access point. The ongoing communication session is then transferred to the new access point, ensuring uninterrupted data transmission. Wi-Fi^{®} roaming enables users to move freely between access points without manually reconnecting.

However, the transition between access points introduces latency. Embodiments herein provide systems, apparatuses, and methods to reduce latency in roaming scenarios. Reduced latency may ensure a seamless user experience. Low latency ensures that the transition between access points is quick and smooth, resulting in uninterrupted connectivity for users. Latency also directly affects the quality of service provided by a Wi-Fi^{®} network. High latency can lead to packet loss, jitter, and other performance issues, resulting in poor voice or video quality, slower data transfer speeds, and decreased overall network performance. Minimizing latency in Wi-Fi^{®} roaming helps maintain high quality of service levels and ensures reliable and efficient data transmission. By reducing latency, the time it takes for a device to authenticate and connect to a new access point is reduced or even minimized. This may allow users to effortlessly switch between access points while maintaining a stable and continuous network connection, enhancing mobility and productivity. Minimizing latency in Wi-Fi^{®} roaming may optimize network utilization.

Various embodiments are described with regard to a station (STA) and access point (AP). However, reference to an STA and AP is merely provided for illustrative purposes. The example embodiments may be utilized with any electronic component that may establish a connection to a network and is configured with the hardware, software, and/or firmware to exchange information and data with the network. Therefore, the STAs and APs as described herein are used to represent any appropriate electronic component.

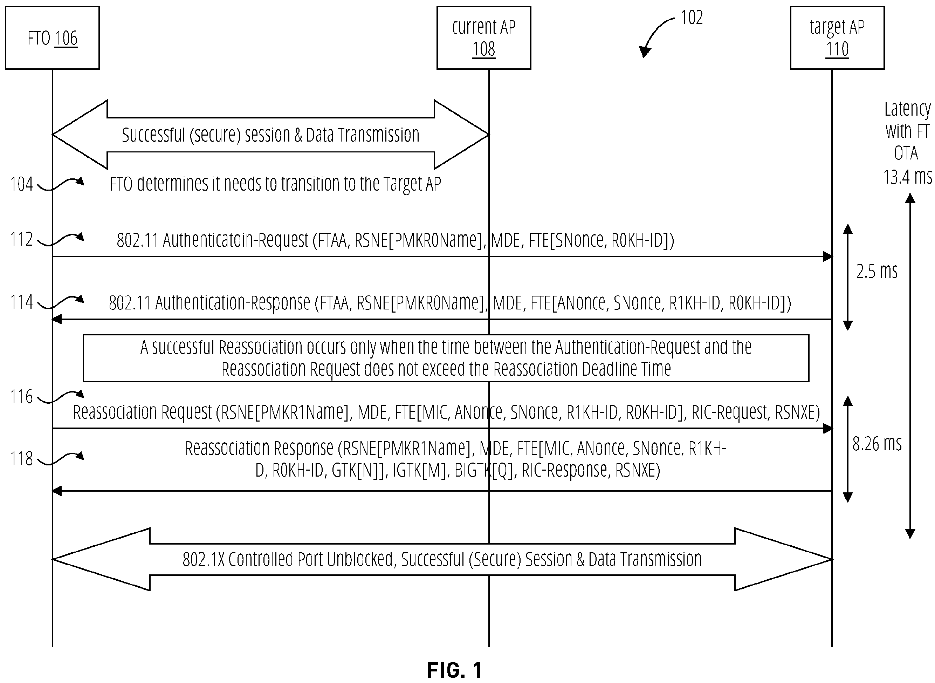

FIG. 1 illustrates an example signal flow diagram 102 for a Fast Basic Service Set (BSS) Transition (FT), in accordance with some embodiments. FT, also known as 802.11r, is a Wi-Fi standard that allows a client device (e.g., FT originator (FTO 106)) to roam from one AP (e.g., current AP 108) to another AP (e.g., target AP 110).

In the signal flow diagram 102, the FTO 106 establishes a successful session and data transmission with the current AP 108. The FTO 106 determines 104 that it needs to transition to the target AP 110. For instance, if the FTO 106 has moved, the signal from the current AP 108 may be weaker than the signal from the target AP 110.

When an STA (e.g., FTO 106) decides to roam to a new AP (e.g., target AP 110), the following steps are conducted for FT. 802.1X controlled port is blocked and PM=1 is sent to current AP 108. Authentication, re-association, and a 4-way handshake for PTK (Pairwise Transient Key) generation are performed. For example, when the FTO 106 needs to roam to the target AP 110, it sends an authentication request frame 112 to the target AP 110. The target AP 110 sends an authentication response frame 114 to the FTO 106. A successful reassociation occurs when the time between the authentication-request and the reassociation request does not exceed the reassociation deadline time. The FTO 106 sends a reassociation request frame 116 to the target AP 110, and the target AP 110 sends a reassociation response frame 118 to the FTO 106. The 802.1X controlled port is unblocked, and the session may be established between the target AP 110 and the FTO 106.

Additionally, as part of the FT, the FTO 106 may send a Gratuitous Address Resolution Protocol (GARP) to target AP 110 to update routing table. The GARP message may be used to update a routing table with new or modified network information. This GARP message may include the FTO's 106 MAC (Media Access Control) address and the network address it desires or has changed. Upon receiving the GARP message, the target AP 110 processes the information and updates its routing table accordingly. This enables a router to forward network traffic appropriately within the network or make routing decisions based on the updated information.

The roaming procedure may introduce latency in the transmission and reception of data. For example, roaming latency may range from 50ms to 120ms. Roaming latency refers to the time difference between the last uplink packet to the current AP 108 and the first uplink packet to the target AP 110. Latency of less than 100ms for video calls or Wi-Fi calling or 40ms for group video calls may be acceptable values. As shown, the authentication frames may cause a 2.5 ms latency, the reassociation frames may cause an 8.26 ms latency. The latency with for FT over the air (OTA) may be 13.4 ms. Further, considerable delay may be caused by the GARP. Embodiments herein may provide latency reduction.

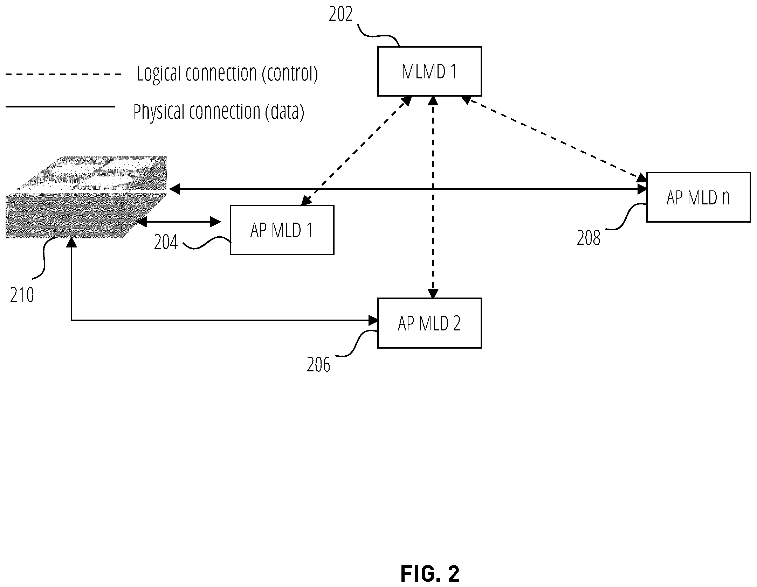

FIG. 2 illustrates an example Multi-link Multi-device (MLMD 202) that may be used to reduce roaming latency, in accordance with some embodiments. The MLMD 202 is a logical (virtual) entity comprising of a set of AP multi-link devices (MLDs) (e.g., AP MLD 204, AP MLD 206, and AP MLD 208). An AP MLD can utilize two or more radios for communications over multiple links (e.g., radio channels in multiple frequency bands) for transmissions to one or more STAs.

Each AP MLD may have a data connection to a router 210. The router 210 maintains information regarding the data path to be able to forward downlink data to where an STA is, regardless of where it has roamed to. As discussed with reference to FIG. 1, typically when an STA moves to a different AP MLD, a delay may occur due to the corresponding need for authentication and reassociation frames.

In some embodiments, there may be a separation between a data connection and a control connection for the AP MLDs. As shown in FIG. 2, a control path may be implemented among the AP MLDs to the MLMD 202. This control path may allow an STA to move from one AP MLD to another AP MLD without the need for authentication and reassociation frames.

In some embodiments, a single MLMD media access control (MAC) address may be used to facilitate movement between different AP MLDs. The MLMD may have an IP address in addition to a MAC address to serve as a virtual MAC Service Access Point (SAP), while the physical MAC SAP resides at each AP MLD associated to the MLMD. That MLMD MAC address may be associated with several MAC address corresponding to each AP MLD. Each AP MLD may have a unique AP MLD MAC address, which may be mapped or associated with the single MLMD address.

For 11bn STAs, after association, data encryption (e.g., CCMP, GCMP) may be performed using the MLMD MAC address and an SN and PN space, which are shared across AP MLDs associated to the MLMD. This may allow the STA to maintain single encryption key (e.g., PTK) across the AP MLDs corresponding to the MLMD 202. This may allow the STA to roam without needing to reassociate because the PTK is based on a common MLMD MAC address that is consistent across the AP MLDs.

This architecture may also support legacy STAs. For 11be STAs, the data encryption may use the AP MLD MAC address. These STAs may perform the procedure outlined in FIG. 1 to roam between the AP MLDs.

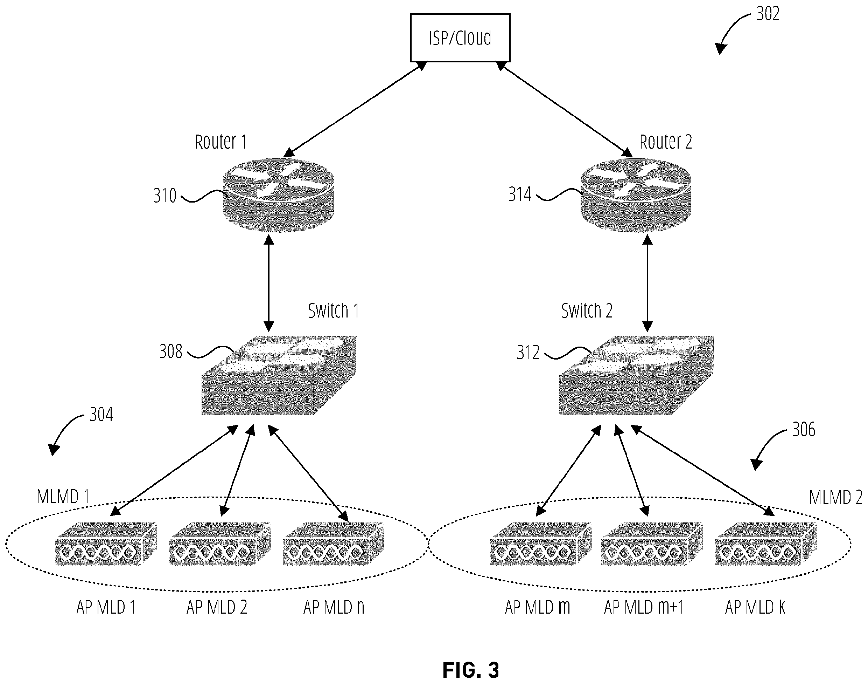

FIG. 3 illustrates an example network diagram 302 that uses two MLMDs (i.e., MLMD 304 and MLMD 306), in accordance with some embodiments. As shown, there may be a set AP MLDs connected to MLMD 304, and another set of AP MLDs connected to MLMD 306. Each of the MLMDs may be communicatively coupled to a router (e.g., router 310 and router 314) and a switch (switch 308 and switch 312). The MLMDs may be coupled through an ISP/cloud connection.

When an STA roams between the AP MLDs associated with MLMD 304, the STA may use the MLMD MAC address and common SN and PN space shared between current AP MLD and the target AP MLD where the STA intends to roam. The use of the MLMD MAC address may eliminate the need of the authentication and reassociation frames, thereby reducing delay. If the STA were to move from MLMD 304 to MLMD 306, it may perform the FT procedure illustrated in FIG. 1. In some embodiments, AP MLDs may be configured to perform data encryption between an STA and an AP using the MLMD MAC address such that the AP MLDs may support the STA roaming between the AP MLDs using a same encryption key, and may use one or multiple of same or shared sequence number (SN), packet number (PN) space, block ACK sessions negotiated for one or multiple traffic identifiers (TIDs), or BA Bitmap for each negotiated TID.

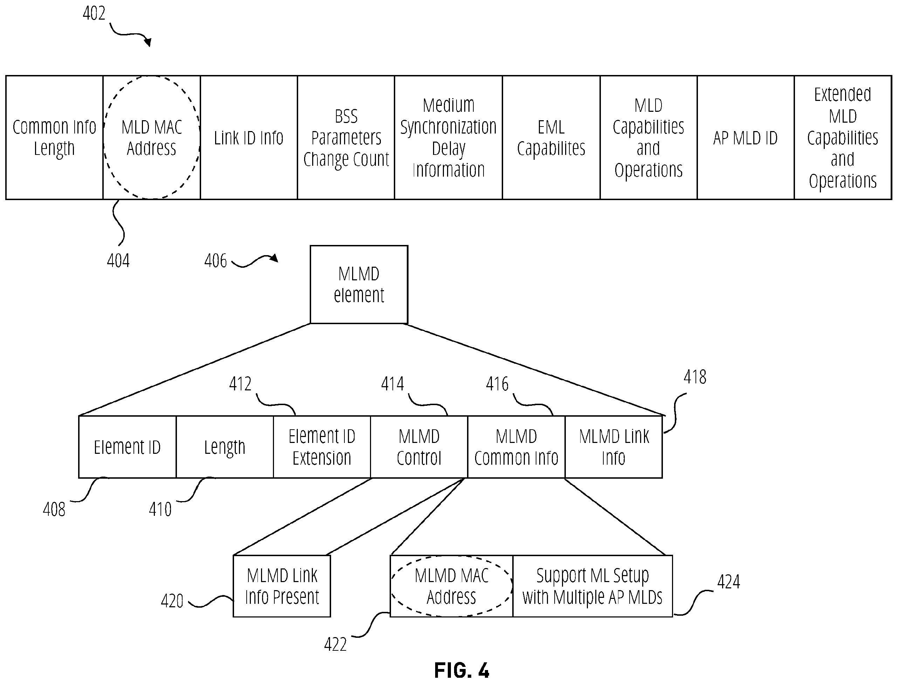

FIG. 4 illustrates an example basic multi-link element (MLE) 402 and an MLMD element 406, in accordance with some embodiments. An AP MLD may send the basic MLE 402 and MLMD element 406 to an STA in a beacon frame. In some embodiments, the MLMD element 406 may be sent to the STA in another management frame, such as a probe response frame. The basic MLE 402 and the MLMD element 406 may include information regarding the MLD and MLMD. For instance, the basic MLE 402 may include the MLD MAC address 404 for the AP MLD.

The MLMD element 406 may include information related to an MLMD associated with the AP MLD. As shown, the MLMD element 406 may include an Element ID field 408. The MLMD element 406 may be included in a beacon frame. The MLMD element 406 may include an element ID field 408, a length field 410, an element ID extension field 412, an MLMD control field 414, an MLMD common information field 416, and an MLMD link information field 418.

The element ID field 408 may identify the element as an MLMD element 406. The element ID extension field 412 can be used to extend the range of element ID values. The length field 410 specifies the length of the MLMD element 406. The MLMD control field 414 may include an MLMD link information present field 420. The MLMD link information present field 420 may indicate whether information is present for the MLMD link.

The MLMD common information field 416 may include an MLMD MAC address field 422 and a support ML setup with multiple AP MLDs field 424. The MLMD MAC address field 422 indicates MLMD MAC address. An STA may discover AP MLDs that are part of a single MLMD based on the MLMD MAC address. The support ML setup with multiple AP MLDs field 424 may indicate support for an ML setup procedure. For instance, the support ML setup with multiple AP MLDs field 424 may be used to indicate support for link setup across AP MLDs after association with a single AP MLD within an MLMD, and support for link setup across AP MLDs during association with a single AP MLD within an MLMD.

In some embodiments, a single service set identifier (SSID) may be used per MLMD. In some embodiments, multiple MLMDs with a single SSID may be allowed. This may assist legacy roaming when roaming between MLMDs. Neighbor report (NR)/reduced neighbor report (RNR) advertising may include MLMD-level parameters and its constituting AP MLDs. Each Basic Service Set Identifier (BSSID) of Multiple BSSID sets may be associated with an AP MLD and an MLMD, as indicated by an indication in a Multiple BSSID element.

When an STA is associating with an AP MLD, the STA may use the MLMD element 406 from a beacon frame to determine the MLMD MAC address. The STA may use the MLMD MAC address to encrypt its data. The STA may use the same encryption as it moves between different AP MLDs under the same MLMD.

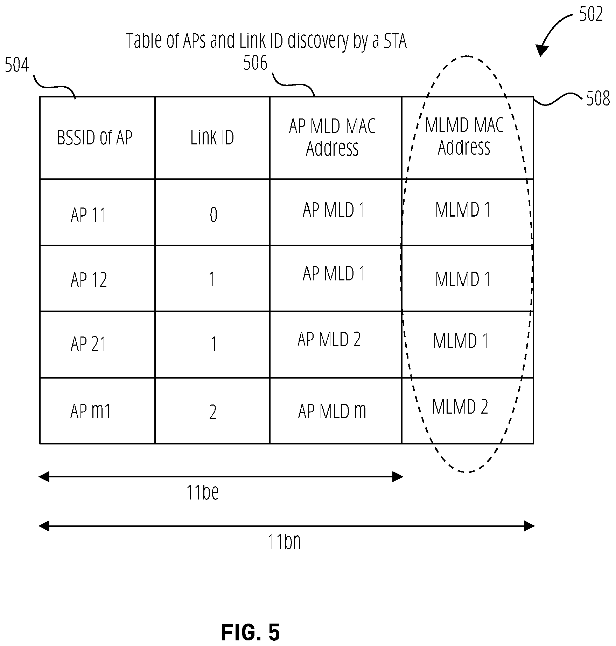

FIG. 5 illustrates an example table 502 of APs and link ID that may be determined by an STA during discovery, in accordance with some embodiments. As shown, an 11be STA may determine the BSSIDs 504 of the APs and the AP MLD MAC address 506 based on an MLE (e.g., basic MLE 402 in FIG. 4). In addition to the BSSIDs 504 of the APs and the AP MLD MAC address 506, an 11bn STA may determine an MLMD MAC address 508 based on an MLMD element (e.g., MLMD element 406 of FIG. 4).

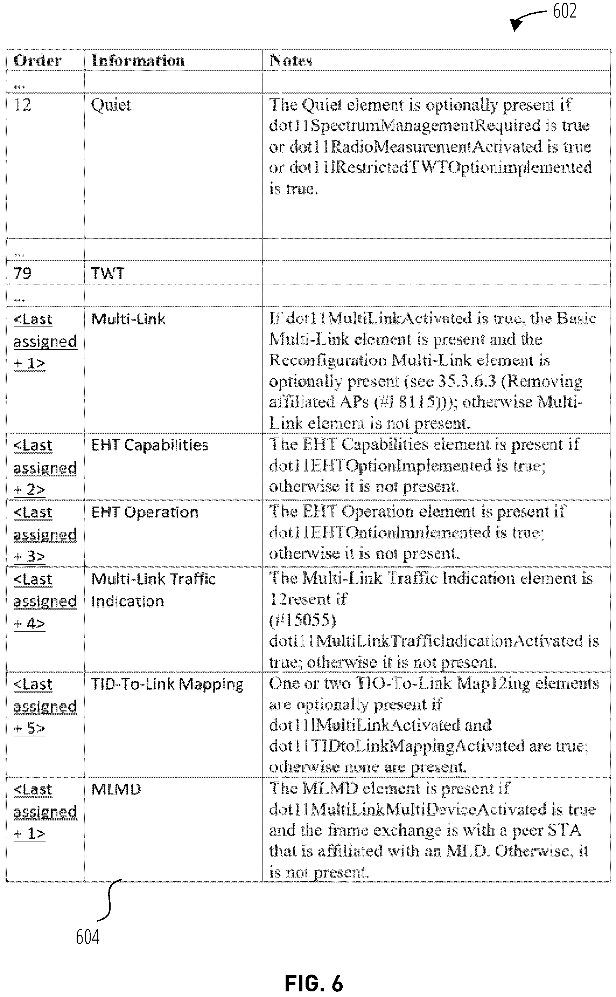

FIG. 6 illustrates an example beacon frame body 602, in accordance with some embodiments. As shown, the beacon frame body 602 may include an MLMD element 604. The MLMD element may be present if dot11MultiLinkMultiDeviceActivated is true and the frame exchange is with a peer STA that is affiliated with an MLD. Otherwise, it may not be present.

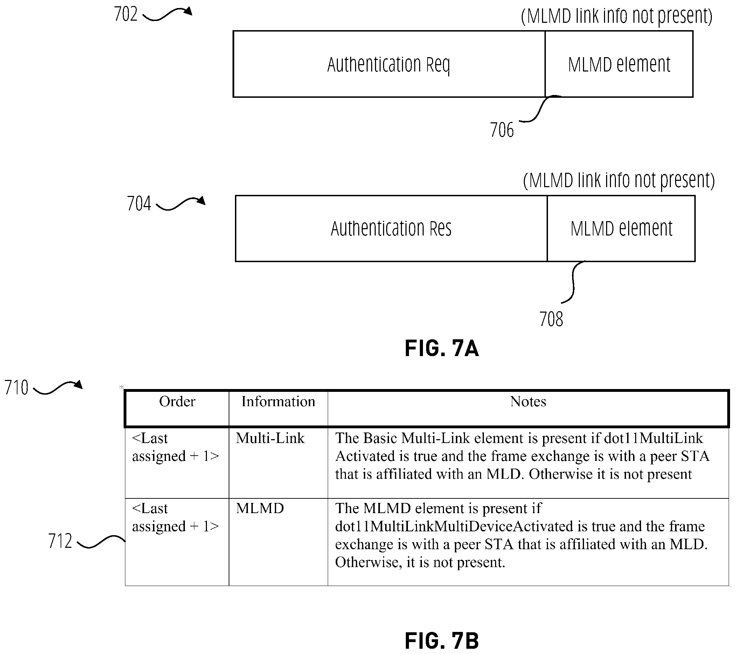

FIG. 7A illustrates an example authentication request frame 702 and an authentication response frame 704, in accordance with some embodiments. For an initial MLMD association and authentication, the STA and the AP MLD may use the authentication request frame 702 and the authentication response frame 704 to indicate support for MLMD-level association.

For example, an STA may perform discovery and find an AP with an acceptable signal strength, e.g., a signal strength that satisfies a predetermined threshold. If the STA is affiliated with another non-AP MLD, it may send the authentication request frame 702 to an AP affiliated with AP MLD. The STA may use the signaling to indicate support for MLMD-level association. For example, the authentication request frame 702 may include an MLMD element 706 that indicates that the STA supports MLMD-level association. In some embodiments, there may be a "Seamless Roaming Support" signaling field in the MAC Capabilities Information element included in a management frame (e.g., Association Request frame) by the STA.

The AP affiliated with an AP MLD sends an authentication response frame 704 to the STA affiliated with a non-AP MLD. The authentication response frame 704 may include an MLMD element 708. The AP may include a "Seamless Roaming Support" signaling field in MAC Capabilities IE included in a management frame (e.g., Beacon frame). The AP may include an MLMD MAC address in an *MLMD MAC Address* subfield of the MLMD element 708 within the frame body of the frame. Note that the AP MLD MAC address may be included in Basic MLE. An STA that receives the authentication response frame 704 may determine that the AP supports MLMD association based on either presence of "Seamless Roaming Support" field in MAC Capabilities IE or the presence of the MLMD element 708 in the authentication response frame 704. The MLMD element 708 may comprise at least one of the following fields, namely, *MLMD Control*, *MLMD Common Info*, and *MLMD Link Info* fields. The *MLMD Link Info* field may not be present in Authentication frames. In some embodiments, the same security context may be used within MLMD (e.g., Counter Mode Cipher Block Chaining Message Authentication Code Protocol (CCMP) 128, Authentication and Key Management (AKM)).

FIG. 7B illustrates an example authentication frame body 710, in accordance with some embodiments. As shown, the authentication frame body 710 may include an MLMD element 712. The MLMD element 712 is present if dot11MultiLinkMultiDeviceActivated is true and the frame exchange is with a peer STA that is affiliated with an MLD. Otherwise, it may not be present.

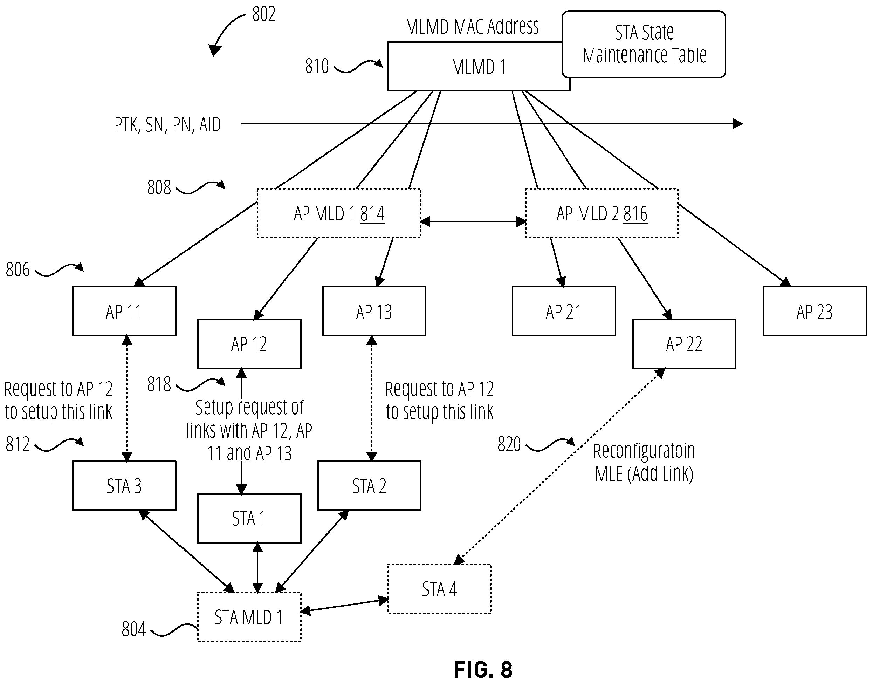

After a discovery state (state 1) and an authentication state (state 2), an STA may associate with one or more APs (state 3). In the state 3, the STA may become authenticated and associated with an AP. FIG. 8 illustrates an example signal diagram 802 for an STA MLD 804 associating with one or more APs 806 that correspond to one or more AP MLDs 808 that correspond to an MLMD 810, in accordance with some embodiments.

An STA MLD 804 may include multiple STAs 812 allowing associations with multiple APs. In the illustrated embodiment, the STA MLD 804 includes four STA (e.g. STA 1, STA 2, STA 3, and STA 4). STA 1, STA 2, and STA 3 may connect to different APs using different frequency ranges. For example, STA 1 may use 2.4 GHz, STA 2 may use 5 GHz, and STA 3 may use 6 GHz. In the illustrated embodiment, STA 4 is a virtual station.

Each AP MLD 808 may include multiple APs (e.g., APs 806). For example, First AP MLD 814 includes AP 11, AP 12, and AP 13. Second AP MLD 816 includes AP 21, AP 22, and AP 23. Each of the AP MLDs 808 may be associated with a single MLMD 810. The MLMD may use a single MLMD MAC address to unify connections between the APs 806 regardless of if they are on a same AP MLD. The MLMD 810 may also keep an STA state maintenance table updated.

The STA MLD 804 may perform an initiation of link(s') setup. The initial MLMD association may be with a single AP MLD (e.g., first AP MLD 814) and then the STA MLD 804 may subsequently add links across multiple AP MLDs. The STA (e.g., STA 1) may send an Association Request frame carrying *MLMD Link Info* field in MLMD element indicating links requested for setup to the AP. The *MLMD Link Info* field comprises of link information of the current AP MLD.

The STA may also send a Reconfiguration MLE to initiate multilink (ML) reconfiguration operation for setting up a link with an AP affiliated to a different AP MLD. Additional overhead may be used for each of the links added to the ML setup.

For example, in the illustrated embodiment, STA 1 sends a setup request 818 to AP 12. The setup request 818 may initiate a link setup between AP 12 and STA 1, AP 11 and STA 3, and AP13 and STA 2. As shown, during this initiation of links setup, the STA MLD 804 initial MLMD association is with a single AP MLD (e.g., first AP MLD 814). For this initial association, STA MLD 804 may send an association request frame carrying an MLMD link information field in an MLMD element indicating that links are requested for setup with AP 11, AP 12, and AP 13.

The STA MLD 804 may then establish links with other AP MLDs (e.g., second AP MLD 816) associated with a same MLMD 810 as the first AP MLD 814. For instance, STA 4 may send a reconfiguration MLE 820 to add a link to AP 22 that is associated with the second AP MLD 816. The reconfiguration MLE 820 may initiate an ML reconfiguration operation for setting up a link with AP 22 and STA 4 even though AP 22 is not affiliated with the first AP MLD 814.

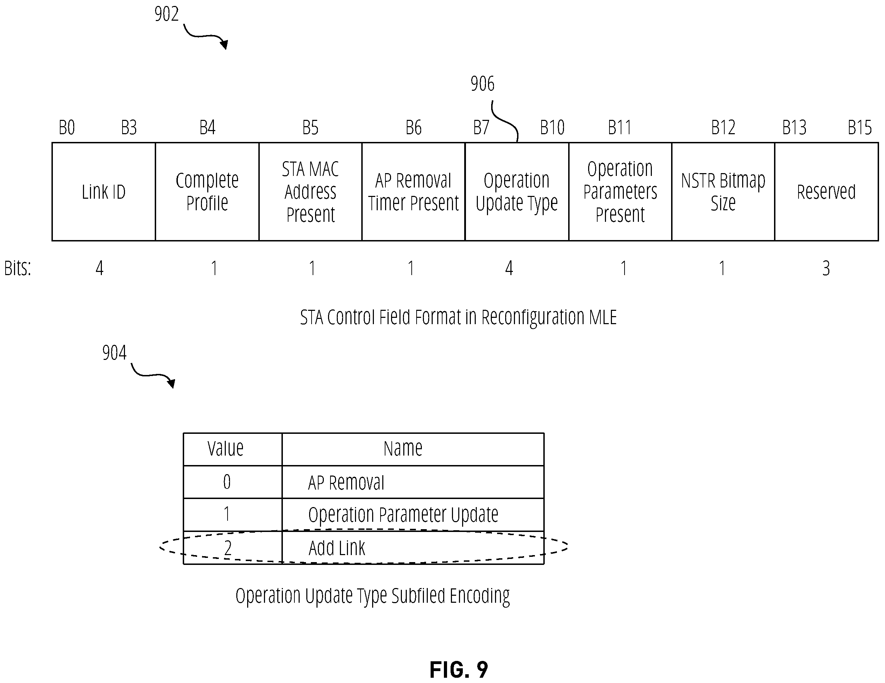

FIG. 9 illustrates an example STA control field format 902 in a reconfiguration MLE, in accordance with some embodiments. An STA may use the STA control field format 902 to indicate that the STA wants to add a link to an AP on a different AP MLD than the current AP MLD that the STA is linked with, and the different AP MLD is affiliated with the same MLMD as the current AP MLD. For example, the STA may use the operation update type subfield 906 to indicate a desire to add a link to another AP on a different AP MLD. As shown, the operation update subfield encoding 904 may include a value (e.g., 2) that indicates that the reconfiguration MLE is to add a link.

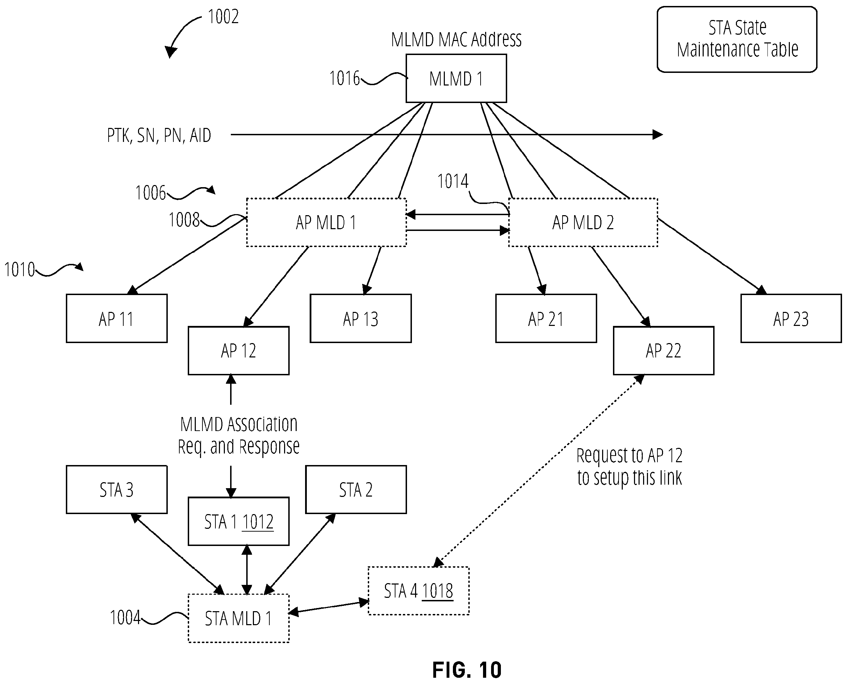

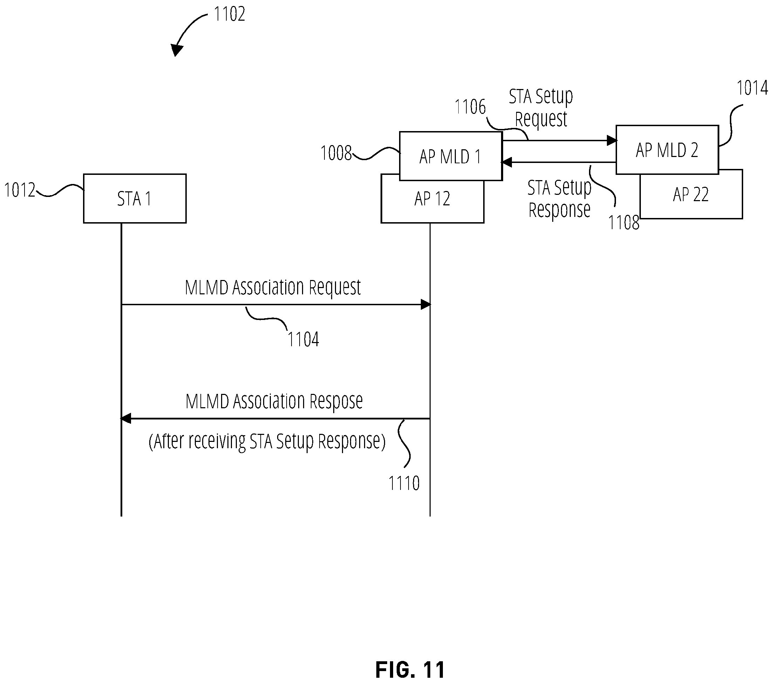

FIGS. 10 and 11 illustrate another association signaling procedure for setup up links across multiple AP MLDs. In FIGS. 8 and 9, to add a link to an AP affiliated with across multiple AP MLDs, the STA would send an association request frame for adding a link to the first AP MLD and then send a reconfiguration MLE to add a link to another AP MLD. FIGS. 10 and 11 define a method that allows the STA to set up links across multiple AP MLDs using a single request frame.

For instance, FIG. 10 illustrates an example signal diagram 1002 for an STA MLD 1004 to set up links across multiple AP MLDs 1006 using an MLMD association request frame with one AP MLD. This method may allow for the setting up of links across multiple AP MLDs and using those links in a standby mode to facilitate roaming across APs 1010 in the different AP MLDs 1006.

As shown, a first STA 1012 sends Association Request frame to a current AP (e.g., AP 12). The Association Request frame may carry an *MLMD Link Info* field in an MLMD element indicating links of multiple AP MLDs requested for setup. The *MLMD Link Info* field may comprise link information either of the current MLD (e.g., first AP MLD 1008) or links of other AP MLDs (e.g., second AP MLD 1014) within the MLMD 1016. The link information may include Link ID and STA MAC Address of an AP affiliated to an AP MLD. For example, in the illustrated embodiment, the first STA 1012 may use the Association Request frame request to set up a link with between AP12 and the first STA 1012, as well as between AP 22 and the fourth STA 1018 through the single request sent to AP 12.

The first AP MLD 814 may send an STA setup request to the second AP MLD 1014 indicating the desired links of the STA MLD 1004. The STA setup request may include the information regarding the links and credentials for the links. The second AP MLD 816 may send an STA setup response to indicate that the links are accepted or rejected. The AP (e.g., AP 12) affiliated with the first AP MLD 1008 may send an Association Response frame carrying *MLMD Link Info* field of all the "accepted" links for setup, following the exchange of messages between the first AP MLD 1008 and the second AP MLD 1014 (i.e., STA Setup Request/Response).

Note that in 11be, there may be a restriction imposed on link(s) setup. That is, each link, out of any two links requested for setup, is located in different non overlapping operating channels for 11be. In some embodiments, this limitation may be relaxed by letting an STA request multiple links for setup that are located in a same operating channel with one link active at any point of time. The other links (e.g., links not actively used for data transmission/reception) may be disabled using power save mode. For instance, a *PM* bit indication for each link identified by the *Link ID* subfield in *MLMD Link Info* field may indicate whether the link is disabled (e.g., in a power saving mode) or enabled. "*Disable link"* signaling may be used for links added to other AP MLDs (e.g., second AP MLD 1014). In other words, the STA MLD may selectively activate and disable links to roam between APs across different STA MLDs.

FIG. 11 illustrates an example signal flow diagram 1102 for setting up of links across multiple AP MLDs using cross AP MLD communication, in accordance with some embodiments. This signal flow diagram 1102 illustrates the communication between the first STA 1012, AP 12, first AP MLD 1008, and second AP MLD 1014 of FIG. 10.

As shown, the first STA 1012 sends an MLMD association request 1104 to AP 12. The MLMD association request 1104 may include an *MLMD Link Information* field in MLMD element indicating links of multiple AP MLDs requested for setup. For instance, the *MLMD Link Information* field may comprise link information either of the current MLD and/or links of other AP MLDs within the MLMD. The link information may include link identification and an STA MAC Address of an AP affiliated to an AP MLD.

If MLMD association request 1104 includes a request for a link setup with AP 22 of the second AP MLD 1014, the AP MLD affiliated with AP12 (i.e., first AP MLD 1008) may send an STA setup request 1106 to the second AP MLD 1014. The first AP MLD 1008 and the second AP MLD 1014 may communicate either over-the-air (OTA) or over the Distributed System (DS) about setting up the desired links for the requesting STA. The STA setup request 1106 may include information and credentials about the links that the first STA 1012 desires to use with AP 22. The second AP MLD 1014 may send an STA setup response 1108 to the first AP MLD 1008. The STA setup response 1108 may indicate that the link is accepted or rejected. AP 12 may send the MLMD association response 1110 to the first STA 1012 after the first AP MLD 1008 receives the STA setup response 1108. The MLMD association response 1110 may include an *MLMD Link Info* field of all accepted links for setup.

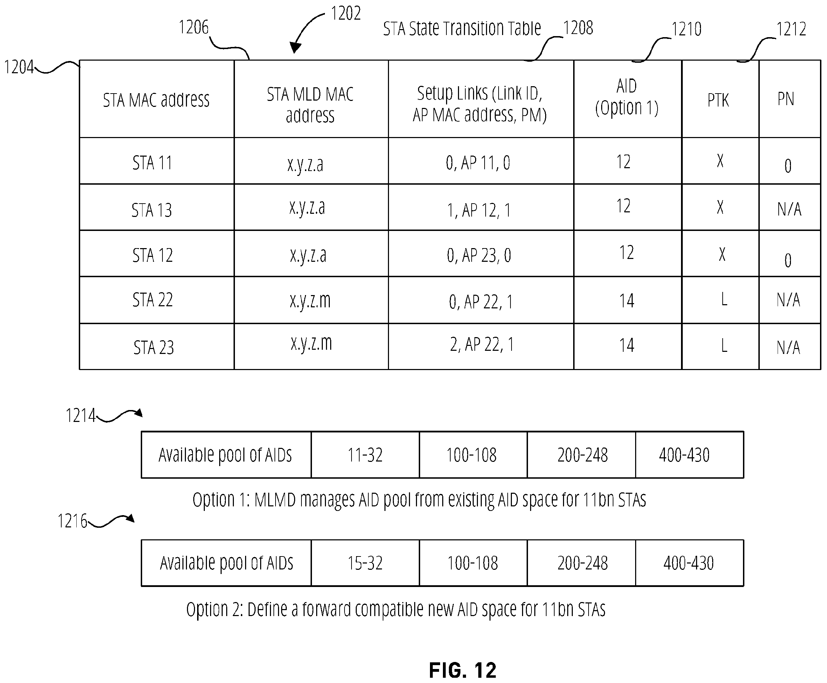

FIG. 12 illustrates an example STA state transition table 1202, in accordance with some embodiments. The STA state transition table 1202 may also be referred to herein as an STA state maintenance table. An MLMD may maintain the STA state transition table 1202 to keep a record of Association identifiers (AID). An AID is a unique identifier that is assigned to a wireless client device when it associates with a wireless access point (AP). The AID may be used to identify the client device.

The AID is a temporary identifier that is valid for the duration of the association. When the client device disassociates from the AP, the AID is released. The MLMD may maintain the STA state transition table 1202 to determine a next available AID to assign when an STA associates with an AP. The MLMD may track the AIDs of STA as they roam between APs.

The STA state transition table 1202 may comprise a list of metrics for each STA. For example, the STA state transition table 1202 may include STA MAC address 1204 and its affiliated non-AP MLD MAC address (e.g., STA MLD MAC address 1206). Thus, the STA state transition table 1202 may include both the MAC address for an STA as well as the MAC address for an STA MLD that is associated with the STA. The STA state transition table 1202 may include AP MAC address of STA's current association. Further, the STA state transition table 1202 may include information 1208 for a subset of links setup with the MLMD. For example, the information 1208 may include details like Link ID, AP MAC address, and PM bit. The STA state transition table 1202 may include the assigned AID 1210 and established Pairwise Transient Key (PTK) per session 1212. The PN per STA MAC address. In some embodiments, the STA state transition table 1202 may include SN and active BA sessions.

The MLMD may manage a set of AP MLDs that are mapped to a single MLMD MAC address. The MLMD may maintain a list of AP MLDs among the set that have direct interface (e.g., Ethernet, optical). In some embodiments (e.g., first option 1214), the STA state transition table 1202 also maintains a pool of AIDs for 11bn STAs. Each AP may update this pool of AIDs as it frees up an AID after disassociation. Each AP may not assign an AID from this pool to legacy STAs.

In some embodiments (e.g., second option 1216), the STA state transition table 1202 may maintain a pool of AIDs from a forward compatible AID space for 11bn STAs. The AP MLD MAC address may be mapped to each of constituent AP MAC addresses.

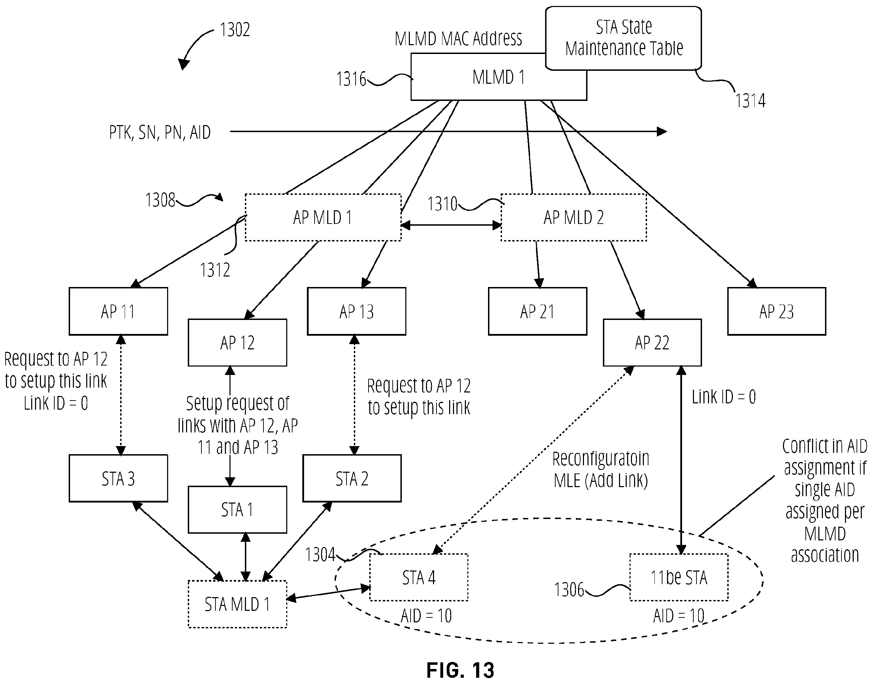

FIG. 13 illustrates an example network 1302 where two STAs (e.g., STA 1304 and 11be STA 1306) are assigned a same AID. Such an AID conflict could arise if a single AID is assigned per MLMD association and the AP MLDs 1308 handle assignment of AIDs without knowledge of other AP MLDs assigned AIDs. In the illustrated example, the first AP MLD 1312 assigns an AID 10 to STA 1304, and second AP MLD 1310 assigns the same AID 10 to a legacy STA (11be STA 1306). When the STA 1304 roams to AP 22, there is a conflict. Accordingly, some embodiments herein use MLMD level AID assignment. The MLMD 1316 may track assigned AIDs on associated AP MLDs 1308 using the STA state maintenance table 1314. In some embodiments, a roaming STA may use the AID assigned by its current AP after roaming to its target AP.

The AID may be included in a Traffic Indication Map (TMI) for Power Save (PS) STAs. The AID may be included in a Multi-User Uplink/Downlink resource assignment. Signaling may be in User Info field in TF. Signaling may be in Extended High Throughput/Ultra-High Rate (EHT/UHR) SIG for Downlink (DL) Multi-User (MU) Physical Protocol Data Unit (PPDU).

In IEEE 802.11be, AID is assigned by an AP MLD to a non-AP MLD upon successful ML setup. All STAs affiliated with a non-AP MLD have the same and single AID assigned to the non-AP MLD.

In IEEE 802.11bn, if there is a single MLMD association for a non-AP MLD the following may be options for handling AID assignment to avoid conflicts. In some embodiments, AID assignment may be at the MLMD level. In some embodiments, AID assignment may be at the MLD level (as in 11be).

For embodiments where the AID assignment may be at the MLMD level, AID may be assigned from a pool of available AIDs maintained in the STA State Maintenance Table 1314. In some embodiments, the pool of available AIDs do not overlap with AIDs assigned to legacy STAs by each of the AP MLDs 1308 within an MLMD 1316. This may lead to conflict handling in AID assignment between roaming and associated STAs.

Embodiments where AID assignment is in the MLD level may allow for local management of AID assignment per AP MLD. However, there may be multiple AIDs to be managed by a non-AP MLD.

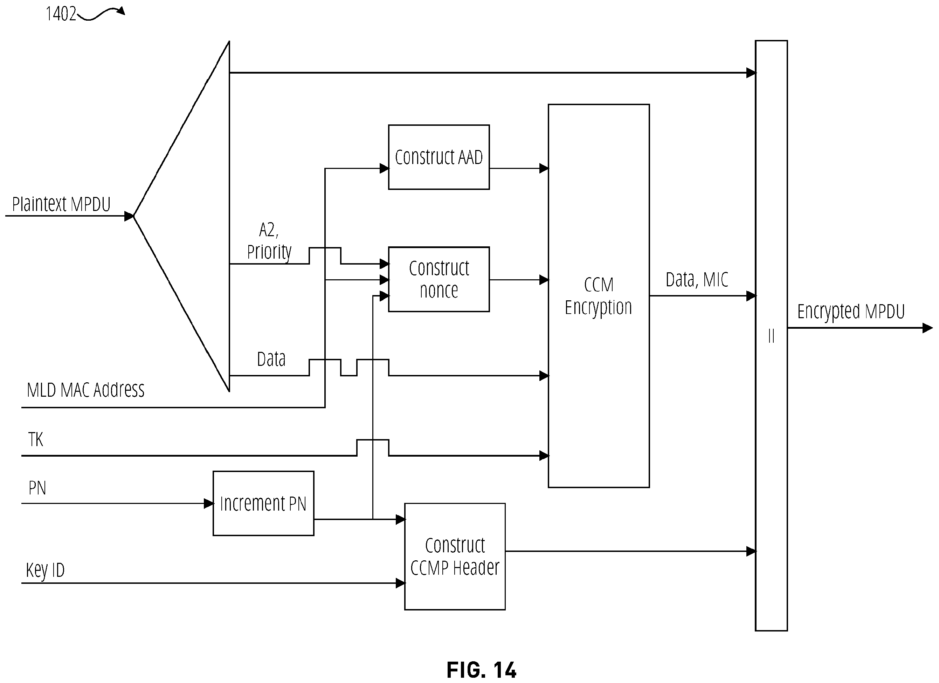

FIG. 14 illustrates an example signal flow diagram 1402 for CCMP encapsulation, in accordance with some embodiments. For a Robust Secure Network Association (RSNA) establishment by an SME and 802.1X authentication (SC 12.6.10) or FT protocol (SC 13.5), an STA may invoke Simultaneous Authentication of Equals (SAE) authentication to establish PMK. Temporal key establishment may imply a unique temporal key (TK) and hence PTK for the session established between an STA and its current AP and the TK and PTK between the STA and its target AP.

In some embodiments, CCMP may use the MLMD MAC address instead of AP MLD MAC address for encryption. CCMP (CTR with CBC-MAC protocol) encapsulation may use knowledge of MPDU MAC header (i.e., Rx MLMD MAC Address (A1), A2, AP's MLMD MAC Address (A3), Sequence Control and QoS Control) to construct AAD (additional authentication data). CCMP encapsulation may use Knowledge of A2 (MLD MAC address of Tx), Priority (QoS Control field), MLMD MAC address, and PN to construct CCM nonce. CCM encryption (data, MIC) may be a function of inputs from constructed AAD, nonce, MPDU data, TK. Encrypted MPDU may be a function of the CCM encryption and constructed CCMP header (function of Key ID, PN - 6 octets). A single PN space for individually addressed MPDUs is maintained by MLD and used for all affiliated STAs using the same TN.

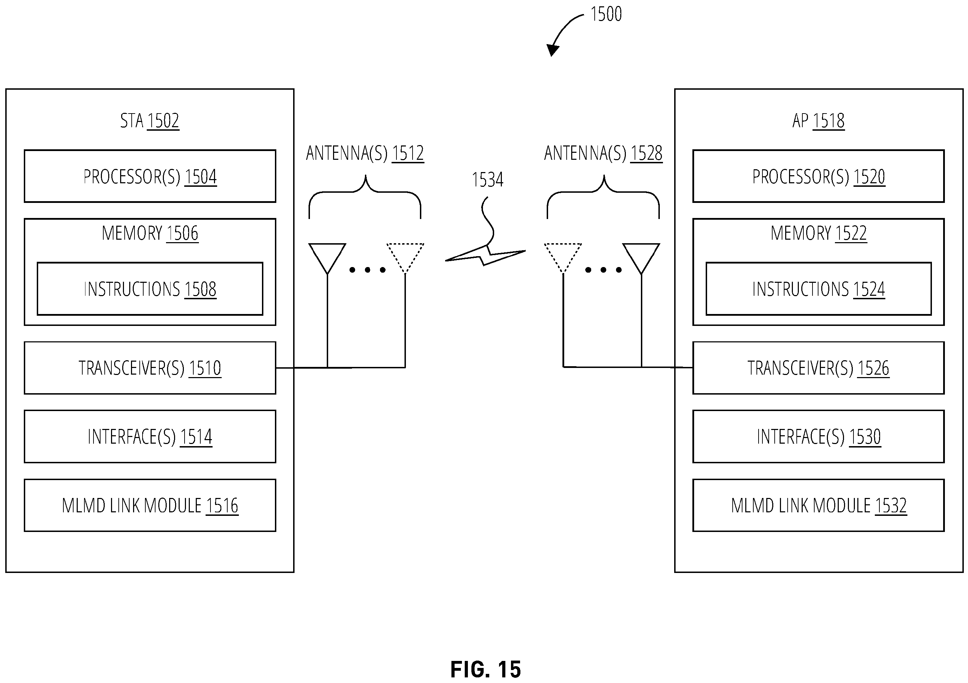

FIG. 15 illustrates an example system 1500 for performing signaling 1534 between an STA 1502 and an AP 1518, according to embodiments disclosed herein. The system 1500 may be a portion of a wireless communications system as herein described. The STA 1502 may be, for example, a UE of a wireless communication system. The AP 1518 may be, for example, an access point of a wireless communication system.

The STA 1502 may include one or more processor(s) 1504. The processor(s) 1504 may execute instructions such that various operations of the STA 1502 are performed, as described herein. The processor(s) 1504 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The STA 1502 may include a memory 1506. The memory 1506 may be a non-transitory computer-readable storage medium that stores instructions 1508 (which may include, for example, the instructions being executed by the processor(s) 1504). The instructions 1508 may also be referred to as program code or a computer program. The memory 1506 may also store data used by, and results computed by, the processor(s) 1504.

The STA 1502 may include one or more transceiver(s) 1510 that may include radio frequency (RF) transmitter circuitry and/or receiver circuitry that use the antenna(s) 1512 of the STA 1502 to facilitate signaling (e.g., the signaling 1534) to and/or from the STA 1502 with other devices (e.g., the AP 1518).

The STA 1502 may include one or more antenna(s) 1512 (e.g., one, two, four, or more). For embodiments with multiple antenna(s) 1512, the STA 1502 may leverage the spatial diversity of such multiple antenna(s) 1512 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the STA 1502 may be accomplished according to precoding (or digital beamforming) that is applied at the STA 1502 that multiplexes the data streams across the antenna(s) 1512 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the STA 1502 may implement analog beamforming techniques, whereby phases of the signals sent by the antenna(s) 1512 are relatively adjusted such that the (joint) transmission of the antenna(s) 1512 can be directed (this is sometimes referred to as beam steering).

The STA 1502 may include one or more interface(s) 1514. The interface(s) 1514 may be used to provide input to or output from the STA 1502. For example, an STA 1502 that is a UE may include interface(s) 1514 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1510/antenna(s) 1512 already described) that allow for communication between the UE and other devices and may operate according to known protocols (e.g., Wi-Fi^{®}, Bluetooth^{®}, and the like).

The STA 1502 may include an MLMD link module 1516. The MLMD link module 1516 may be implemented via hardware, software, or combinations thereof. For example, the MLMD link module 1516 may be implemented as a processor, circuit, and/or instructions 1508 stored in the memory 1506 and executed by the processor(s) 1504. In some examples, the MLMD link module 1516 may be integrated within the processor(s) 1504 and/or the transceiver(s) 1510. For example, the MLMD link module 1516 may be implemented by a combination of software components (e.g., executed by a DSP or a general processor) and hardware components (e.g., logic gates and circuitry) within the processor(s) 1504 or the transceiver(s) 1510.

The MLMD link module 1516 may be used for various aspects of the present disclosure, for example, aspects of FIGS. 2-14. The MLMD link module 1516 is configured to establish links with one or more APs across one or more AP MLDs that are associated with an MLMD.

The AP 1518 may include one or more processor(s) 1520. The processor(s) 1520 may execute instructions such that various operations of the AP 1518 are performed, as described herein. The processor(s) 1520 may include one or more baseband processors implemented using, for example, a CPU, a DSP, an ASIC, a controller, an FPGA device, another hardware device, a firmware device, or any combination thereof configured to perform the operations described herein.

The AP 1518 may include a memory 1522. The memory 1522 may be a non-transitory computer-readable storage medium that stores instructions 1524 (which may include, for example, the instructions being executed by the processor(s) 1520). The instructions 1524 may also be referred to as program code or a computer program. The memory 1522 may also store data used by, and results computed by, the processor(s) 1520.

The AP 1518 may include one or more transceiver(s) 1526 that may include RF transmitter circuitry and/or receiver circuitry that use the antenna(s) 1528 of the AP 1518 to facilitate signaling (e.g., the signaling 1534) to and/or from the AP 1518 with other devices (e.g., the STA 1502).

The AP 1518 may include one or more antenna(s) 1528 (e.g., one, two, four, or more). In embodiments having multiple antenna(s) 1528, the AP 1518 may perform MIMO, digital beamforming, analog beamforming, beam steering, etc., as has been described.

The AP 1518 may include one or more interface(s) 1530. The interface(s) 1530 may be used to provide input to or output from the AP 1518. For example, an AP 1518 that is a base station may include interface(s) 1530 made up of transmitters, receivers, and other circuitry (e.g., other than the transceiver(s) 1526/antenna(s) 1528 already described) that enables the base station to communicate with other equipment in a core network, and/or that enables the base station to communicate with external networks, computers, databases, and the like for purposes of operations, administration, and maintenance of the base station or other equipment operably connected thereto.

The AP 1518 may include an MLMD link module 1532. The MLMD link module 1532 may be implemented via hardware, software, or combinations thereof. For example, the MLMD link module 1532 may be implemented as a processor, circuit, and/or instructions 1524 stored in the memory 1522 and executed by the processor(s) 1520. In some examples, the MLMD link module 1532 may be integrated within the processor(s) 1520 and/or the transceiver(s) 1526. For example, the MLMD link module 1532 may be implemented by a combination of software components (e.g., executed by a DSP or a general processor) and hardware components (e.g., logic gates and circuitry) within the processor(s) 1520 or the transceiver(s) 1526.

The MLMD link module 1532 may be used for various aspects of the present disclosure, for example, aspects of FIGS. 2-14. The MLMD link module 1532 is configured to establish links with one or more APs across one or more AP MLDs that are associated with an MLMD.

For one or more embodiments, at least one of the components set forth in one or more of the preceding figures may be configured to perform one or more operations, techniques, processes, and/or methods as set forth herein. For example, a processor as described herein in connection with one or more of the preceding figures may be configured to operate in accordance with one or more of the examples set forth herein. For another example, circuitry associated with an STA or AP as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

## Claims

1. A wireless communication system, the system comprising:
a Multi-link Multi-device, MLMD, comprising an MLMD MAC address; and
a set of access point, AP, multi-link devices, MLDs, associated with the MLMD, wherein each of the AP MLDs comprise one or more APs,
wherein the AP MLDs are configured to perform data encryption between a station, STA, and an AP using the MLMD MAC address, wherein the AP MLDs support the STA roaming between the AP MLDs using a same encryption key based on the MLMD MAC address, and use one or multiple of same or shared sequence number, SN, packet number, PN, space, block ACK sessions negotiated for one or multiple traffic identifiers, TIDs, or BA Bitmap for each negotiated TID.

2. The system of claim 1, further comprising multiple routers coupled to the AP MLDs, wherein the AP MLDs have a data path with the router and a control path with the MLMD.

3. The system of either of claims 1 or 2, wherein the AP MLDs are further configured to send an MLMD element to the STA during a beacon frame, wherein the MLMD element comprises the MLMD MAC address and may include an MLMD IP address.

4. The system of claim 3, wherein the MLMD element further comprises a field that indicates whether the AP MLD supports link setup across the AP MLDs after association with a single AP MLD within the MLMD, or supports link setup across the AP MLDs during association with the single AP MLD within the MLMD.

5. The system of any preceding claim, wherein a single service set identifier (SSID) is used for the MLMD that is different than other MLMDs.

6. The system of any of claims 1 to 4, wherein multiple MLMDs use a single service set identifier (SSID).

7. The system of any preceding claim, wherein the APs are configured to:
receive an authentication request from the STA, wherein the authentication request comprises an indication that the STA supports MLMD-level association; and
send an authentication response that includes the MLMD MAC address.

8. The system of any preceding claim, wherein the MLMD is configured to maintain an STA state transition table to track assigned association identifiers, AID, and determine a next available AID to assign.

9. The system of any preceding claim, wherein the STA corresponds to an STA MLD, and
wherein a first AP receives an association request from the STA, and
a second AP on a different AP MLD receives a reconfiguration multi-link element, MLE, from a second STA corresponding to the STA MLD, wherein the reconfiguration MLE includes an update type field that indicates the reconfiguration MLE is to add a link between the second AP and the second STA.

10. The system of any preceding claim, wherein the STA corresponds to an STA MLD, and wherein a first AP receives an association request from the STA, the association request indicating desired links to be setup with APs across multiple of the AP MLDs, and wherein the AP MLDs communicate between each other either over-the-air, OTA, or over a Distributed System, DS, about setting up the desired links for the STA.

11. A method for operation of a station, STA, multi-link device, MLD, the method comprising:
receiving beacon frames from two or more access point, AP, multi-link devices, MLDs, wherein the beacon frames comprise an Multi-link Multi-device, MLMD, element with a MLMD MAC address;
determining which of the AP MLDs are associated with a same MLMD based on the MLMD MAC address;
sending an authentication request, wherein the authentication request comprises an indication that the STA supports MLMD-level association;
receiving an authentication response that includes the MLMD MAC address;
establishing links between one or more STAs affiliated with the STA MLD and one or more APs across the AP MLDs that are associated with the same MLMD; and
performing data encryption using the MLMD MAC address, and roaming between the AP MLDs using a same encryption key.

12. The method for operation of claim 11, further comprising:
selectively activating and disabling the links to roam between APs across different STA MLDs.

13. The method for operation of either of claims 11 or 12, wherein establishing a link comprises sending an association request to a first AP on a first AP MLD, and sending a reconfiguration multi-link element, MLE, to a second AP on a second AP MLD, wherein the reconfiguration MLE includes an update type field that indicates the reconfiguration MLE is for adding the links; or
wherein establishing a link comprises sending an association request to a first AP on a first AP MLD, the association request indicating desired links to be setup with the APs across multiple of the AP MLDs, and wherein the AP MLDs communicate between each other either over-the-air, OTA, or over a Distributed System, DS, about setting up the desired links for the STA.

14. An apparatus comprising means to perform the method of any of claim 11 to claim 13.

15. A computer-readable media comprising instructions to cause an electronic device, upon execution of the instructions by one or more processors of the electronic device, to perform the method of any of claim 11 to claim 13.

## Patentansprüche

1. Drahtloses Kommunikationssystem, wobei das System umfasst:
eine Mehrfachverbindungs-Mehrfachgerät, MLMD, die eine MLMD-MAC-Adresse umfasst; und
einen Satz von Zugangspunkt, AP, Mehrfachverbindungsgeräten, MLDs, die der MLMD zugeordnet sind,
wobei jedes der AP-MLDs einen oder mehrere APs umfasst,
wobei die AP-MLDs konfiguriert sind, um eine Datenverschlüsselung zwischen einer Station, STA, und einem AP unter Verwendung der MLMD-MAC-Adresse durchzuführen, wobei die AP-MLDs das STA-Roaming zwischen den AP-MLDs unterstützen,
Verwenden eines gleichen Verschlüsselungsschlüssels basierend auf der MLMD-MAC-Adresse, und Verwenden eines oder mehrerer des gleichen oder gemeinsam genutzten Sequenznummer-, SN-, Paketnummer-, PN-, Raums, Block-ACK-Sitzungen, die für eine oder mehrere Verkehrskennungen, TIDs, oder BA-Bitmap für jede ausgehandelte TID ausgehandelt werden.

2. System nach Anspruch 1, ferner umfassend mehrere Router, die mit den AP-MLDs gekoppelt sind, wobei die AP-MLDs einen Datenpfad mit dem Router und einen Steuerpfad mit der MLMD aufweisen.

3. System nach einem der Ansprüche 1 oder 2, wobei die AP-MLDs ferner konfiguriert sind, um ein MLMD-Element während eines Beacon-Rahmens an die STA zu senden, wobei das MLMD-Element die MLMD-MAC-Adresse umfasst und eine MLMD-IP-Adresse enthalten kann.

4. System nach Anspruch 3, wobei das MLMD-Element ferner ein Feld umfasst, das anzeigt, ob die AP-MLD einen Verbindungsaufbau über die AP-MLDs nach der Verknüpfung mit einer einzelnen AP-MLD innerhalb der MLMD unterstützt, oder einen Verbindungsaufbau über die AP-MLDs während der Verknüpfung mit der einzelnen AP-MLD innerhalb der MLMD unterstützt.

5. System nach einem der vorhergehenden Ansprüche, wobei eine einzelne Dienstsatzkennung (SSID) für die MLMD verwendet wird, die sich von anderen MLMDs unterscheidet.

6. System nach einem der Ansprüche 1 bis 4, wobei mehrere MLMDs eine einzelne Dienstsatzkennung (SSID) verwenden.

7. System nach einem der vorhergehenden Ansprüche, wobei die APs konfiguriert sind, um:
eine Authentifizierungsanforderung von der STA zu empfangen, wobei die Authentifizierungsanforderung eine Anzeige umfasst, dass die STA eine Verknüpfung auf MLMD-Ebene unterstützt; und
eine Authentifizierungsantwort zu senden, die die MLMD-MAC-Adresse enthält.

8. System nach einem der vorhergehenden Ansprüche, wobei die MLMD konfiguriert ist, um eine STA-Zustandsübergangstabelle zu führen, um zugewiesene Verknüpfungskennungen, AID, zu verfolgen und eine nächste verfügbare AID zum Zuweisen zu bestimmen.

9. System nach einem der vorhergehenden Ansprüche, wobei die STA einer STA-MLD entspricht, und
wobei ein erster AP eine Verknüpfungsanforderung von der STA empfängt, und ein zweiter AP auf einer anderen AP-MLD ein Rekonfigurations-Mehrfachverbindungselement, MLE, von einer zweiten STA empfängt, die der STA-MLD entspricht, wobei das Rekonfigurations-MLE ein Aktualisierungstypfeld enthält, das anzeigt, dass das Rekonfigurations-MLE eine Verbindung zwischen dem zweiten AP und der zweiten STA hinzufügen soll.

10. System nach einem der vorhergehenden Ansprüche, wobei die STA einer STA-MLD entspricht, und wobei ein erster AP eine Verknüpfungsanforderung von der STA empfängt, wobei die Verknüpfungsanforderung gewünschte Verbindungen anzeigt, die mit APs über mehrere der AP-MLDs aufgebaut werden sollen, und wobei die AP-MLDs entweder über die Luft, OTA, oder über ein verteiltes System, DS, über das Aufbauen der gewünschten Verbindungen für die STA miteinander kommunizieren.

11. Verfahren zum Betrieb einer Station, STA, eines Mehrfachverbindungsgeräts, MLD, wobei das Verfahren umfasst:
Empfangen von Beacon-Rahmen von zwei oder mehr Zugangspunkt, AP, Mehrfachverbindungsgeräten, MLDs, wobei die Beacon-Rahmen ein Mehrfachverbindungs-Mehrfachgerät, MLMD, -Element mit einer MLMD-MAC-Adresse umfassen;
Bestimmen, welche der AP-MLDs mit einer gleichen MLMD verknüpft sind, basierend auf der MLMD-MAC-Adresse;
Senden einer Authentifizierungsanforderung, wobei die Authentifizierungsanforderung eine Anzeige umfasst, dass die STA eine Verknüpfung auf MLMD-Ebene unterstützt;
Empfangen einer Authentifizierungsantwort, die die MLMD-MAC-Adresse enthält;
Herstellen von Verbindungen zwischen einer oder mehreren STAs, die mit der STA-MLD verbunden sind, und einem oder mehreren APs über die AP-MLDs, die mit der gleichen MLMD verknüpft sind; und
Durchführen einer Datenverschlüsselung unter Verwendung der MLMD-MAC-Adresse und eines Roamings zwischen den AP-MLDs unter Verwendung eines gleichen Verschlüsselungsschlüssels.

12. Verfahren zum Betrieb nach Anspruch 11, ferner umfassend:
selektives Aktivieren und Deaktivieren der Verbindungen zum Roaming zwischen APs über verschiedene STA-MLDs.

13. Verfahren zum Betrieb nach einem der Ansprüche 11 oder 12, wobei das Herstellen einer Verbindung das Senden einer Verknüpfungsanforderung an einen ersten AP auf einer ersten AP-MLD und das Senden eines Rekonfigurations-Mehrfachverbindungselements, MLE, an einen zweiten AP auf einer zweiten AP-MLD umfasst, wobei das Rekonfigurations-MLE ein Aktualisierungstypfeld enthält, das anzeigt, dass das Rekonfigurations-MLE zum Hinzufügen der Verbindungen dient; oder
wobei das Herstellen einer Verbindung das Senden einer Verknüpfungsanforderung an einen ersten AP auf einer ersten AP-MLD umfasst, wobei die Verknüpfungsanforderung gewünschte Verbindungen anzeigt, die mit den APs über mehrere der AP-MLDs aufgebaut werden sollen, und wobei die AP-MLDs entweder über die Luft, OTA, oder über ein verteiltes System, DS, über das Aufbauen der gewünschten Verbindungen für die STA miteinander kommunizieren.

14. Vorrichtung, umfassend Mittel zum Durchführen des Verfahrens nach einem der Ansprüche 11 bis 13.

15. Computerlesbares Medium, umfassend Anweisungen, um ein elektronisches Gerät bei Ausführung der Anweisungen durch einen oder mehrere Prozessoren des elektronischen Geräts zu veranlassen, das Verfahren nach einem der Ansprüche 11 bis 13 durchzuführen.

## Revendications

1. Un système de communication sans fil, le système comprenant :
un multidispositif à liaisons multiples, MLMD, comprenant une adresse MAC MLMD ; et
un ensemble de dispositifs à liaisons multiples, MLD, de point d'accès, AP, associés au MLMD, dans lequel chacun des MLD AP comprend un ou plusieurs points d'accès,
dans lequel les MLD AP sont configurés pour réaliser un chiffrement de données entre une station, STA et un AP en utilisant l'adresse MAC MLMD, dans lequel les MLD AP prennent en charge l'itinérance STA entre les MLD AP en utilisant une même clé de chiffrement sur la base de l'adresse MAC MLMD, et utilisent un ou plusieurs parmi un numéro de séquence, SN, identique ou partagé, un numéro de paquet, PN, un espace, des sessions de bloc ACK négociées pour un ou plusieurs identifiants de trafic, TID, ou un bitmap BA pour chaque TID négocié.

2. Le système selon la revendication 1, comprenant en outre de multiples routeurs couplés aux MLD AP, dans lequel les MLD AP ont un chemin de données avec le routeur et un chemin de contrôle avec le MLMD.

3. Le système selon l'une des revendications 1 ou 2, dans lequel les MLD AP sont en outre configurés pour envoyer un élément MLMD à la STA pendant une trame de balise, dans lequel l'élément MLMD comprend l'adresse MAC MLMD et peut inclure une adresse IP MLMD.

4. Le système selon la revendication 3, dans lequel l'élément MLMD comprend en outre un champ qui indique si le MLD AP prend en charge la configuration de liaison à travers les MLD AP après association avec un unique MLD AP à l'intérieur du MLMD, ou bien prend en charge la configuration de liaison à travers les MLD AP pendant l'association avec l'unique MLD AP à l'intérieur du MLMD.

5. Le système selon une revendication précédente, dans lequel un unique identifiant d'ensemble de services (SSID) est utilisé pour le MLMD qui est différent par rapport à d'autres MLMD.

6. Le système selon l'une des revendications 1 à 4, dans lequel plusieurs MLMD utilisent un unique identifiant d'ensemble de services (SSID).

7. Le système selon l'une des revendications précédentes, dans lequel les AP sont configurés pour :
recevoir une requête d'authentification à partir de la STA, dans lequel la requête d'authentification comprend une indication que la STA prend en charge une association de niveau MLMD ; et
envoyer une réponse d'authentification qui inclut l'adresse MAC MLMD.

8. Le système selon l'une des revendications précédentes, dans lequel le MLMD est configuré pour maintenir un tableau de transition d'état STA pour suivre des identifiants d'association, AID, attribués et déterminer un prochain AID disponible à attribuer.

9. Le système selon l'une des revendications précédentes, dans lequel la STA correspond à un MLD STA, et
dans lequel un premier AP reçoit une requête d'association à partir de la STA, et
un second AP sur un MLD AP différent reçoit un élément à liaisons multiples, MLE, de reconfiguration à partir d'une seconde STA correspondant au MLD STA, dans lequel le MLE de reconfiguration inclut un champ de type de mise à jour qui indique que le MLE de reconfiguration doit ajouter une liaison entre le second AP et la seconde STA.

10. Le système selon l'une des revendications précédentes, dans lequel la STA correspond à un MLD STA, et dans lequel un premier AP reçoit une requête d'association à partir de la STA, la requête d'association indiquant des liaisons souhaitées à configurer avec des AP sur plusieurs des MLD AP, et dans lequel les MLD AP communiquent entre eux soit en over-the-air, OTA, soit via un système distribué, DS, sur la configuration des liaisons souhaitées pour la STA.

11. Un procédé de fonctionnement d'un dispositif à liaisons multiples, MLD, de station, STA, le procédé comprenant :
la réception de trames de balise à partir de deux dispositifs à liaisons multiples, MDL, de point d'accès, AP, ou plus, dans lequel les trames de balise comprennent un élément de multidispositif à liaisons multiples, MLMD, avec une adresse MAC MLMD ;
la détermination desquels parmi les MLD AP sont associés à un même MLMD sur la base de l'adresse MAC MLMD ;
l'envoi d'une requête d'authentification, dans laquelle la requête d'authentification comprend une indication que la STA prend en charge une association de niveau MLMD ;
la réception d'une réponse d'authentification qui inclut l'adresse MAC MLMD ;
l'établissement de liaisons entre une ou plusieurs STA affiliées au MLD STA et un ou plusieurs AP à travers les MLD AP qui sont associés au même MLMD ; et
la réalisation d'un chiffrement de données en utilisant l'adresse MAC MLMD, et l'itinérance entre les MLD AP en utilisant une même clé de chiffrement.

12. Le procédé de fonctionnement selon la revendication 11, comprenant en outre :
l'activation et la désactivation sélectives des liaisons pour l'itinérance entre des AP à travers différents MLD STA.

13. Le procédé de fonctionnement selon l'une des revendications 11 ou 12, dans lequel l'établissement d'une liaison comprend l'envoi d'une requête d'association à un premier AP sur un premier MLD AP, et l'envoi d'un élément à liaisons multiples de reconfiguration, MLE, à un second AP sur un second MLD AP, dans lequel le MLE de reconfiguration inclut un champ de type de mise à jour qui indique que le MLE de reconfiguration est destiné à ajouter les liaisons ; ou
dans lequel l'établissement d'une liaison comprend l'envoi d'une requête d'association à un premier AP sur un premier MLD AP, la requête d'association indiquant des liaisons souhaitées à configurer avec les AP sur plusieurs des MLD AP, et dans lequel les MLD AP communiquent entre eux soit en over-the-air, OTA, soit via un système distribué, DS, sur la configuration des liaisons souhaitées pour la STA.

14. Un appareil comprenant des moyens pour réaliser le procédé selon l'une de la revendication 11 à la revendication 13.

15. Un support lisible par calculateur comprenant des instructions pour amener un dispositif électronique, lors de l'exécution des instructions par un ou plusieurs processeurs du dispositif électronique, à réaliser le procédé selon l'une de la revendication 11 à la revendication 13.
